# EUROPEAN PATENT APPLICATION

(11) **EP 1 283 073 A1**
(43) Date of publication of application: **12.02.2003**
(21) Application number: 01202914.6
(22) Date of filing: 31.07.2001
(51) Int. Cl.: B01J 37/02, B01J 19/00

(54) **Method of preparing a supported catalyst in a vessel**

(71) Applicant: Avantium International B.V., 1014 BV Amsterdam (NL)
(72) Inventor: Van de Brink, Peter John, 3972 EJ Driebergen (NL); Sijpkes, André Harmen, 1338 SZ Almere (NL); Harji, Bashir Husein, Cottenham CB4 8XJ (GB)
(74) Representative: Bakkum, Ruben Joseph

(57) **Abstract**

The present invention relates to a method of preparing a supported catalyst in a vessel comprising a vessel inlet, a vessel outlet and a porous element closing off the vessel outlet, the supported catalyst comprising an active phase on a support, wherein the method comprises the following steps all being performed in the same vessel of:
(a) feeding the support into the vessel through the vessel inlet;
(b) contacting the support with an impregnation liquid containing the active phase in the vessel;
(c) impregnating the support with the impregnation liquid;
(d) optionally draining the impregnated support obtained in step (c) by removing excess impregnation liquid through the porous element;
(e) optionally drying the drained impregnated support;
(f) optionally calcining the dried impregnated support obtained in step (c), (d) or (e), providing the supported catalyst; and
(g) collecting the supported catalyst obtained in step (c), (d), (e) or (f).

Further the present invention relates to an apparatus suitable for performing the method.

## Description

The present invention relates to a method of preparing a supported catalyst in a vessel.

Methods of preparing a supported catalyst in a vessel are known in practice. Generally, three different methods are used to prepare a supported catalyst, classified according to the type of impregnation used:
- 'Incipient wetness impregnation', wherein the volume of the added impregnation liquid exactly matches the pore volume of the support.
- 'Dip impregnation' or 'wet impregnation' wherein a surplus of liquid is added to the support and the excess is drained just after the support is completely filled with liquid.
- 'Adsorption impregnation' wherein a surplus of liquid is added to the support and the excess is removed only after a relatively long time allowing for adsorption of the dissolved species.

In the known methods, a certain amount of support is manually weighed off and transferred into a vessel. Then the support is contacted with an impregnation liquid containing an active phase by pouring the impregnation liquid manually into the vessel. After impregnation, the impregnated support is transferred manually to a filter to optionally remove excess impregnation liquid and is dried. Subsequently, the dried impregnated support is again transferred manually to another vessel and calcined in an oven.

A problem of the known methods is that they are extremely labour-intensive and very time-consuming, and involve substantial risks of contamination of the supported catalyst to be prepared. Moreover, the known methods are not easy to automate as the transfer of sticky wetted solids involves laborious scraping.

Therefore it is an object of the present invention to solve the above-mentioned problem.

It is a further object of the present invention to provide an alternative method of preparing a supported catalyst, which method is useful in high throughput experimentation.

The above and other objects are achieved according to the present invention by a method of preparing a supported catalyst in a vessel comprising a vessel inlet, a vessel outlet and a porous element closing off the vessel outlet, the supported catalyst comprising an active phase on a support, wherein the method comprises the following steps all being performed in the same vessel of:
(a) feeding the support into the vessel through the vessel inlet;
(b) contacting the support with an impregnation liquid containing the active phase in the vessel;
(c) impregnating the support with the impregnation liquid;
(d) optionally draining the impregnated support obtained in step (c) by removing excess impregnation liquid through the porous element;
(e) optionally drying the drained impregnated support;
(f) optionally calcining the dried impregnated support obtained in step (c), (d) or (e), providing the supported catalyst; and
(g) collecting the supported catalyst obtained in step (c), (d) , (e), or (f) .

Using the method according to the present invention a supported catalyst can be prepared in a very elegant and surprisingly simple way. As the steps are all performed in the same vessel, contamination of the supported catalyst to be prepared is not likely to occur (as no sample transfer is needed between the various steps), or at least minimized.

The method according to the present invention can be used for all types of preparing supported catalysts, including incipient wetness impregnation, dip impregnation and adsorption impregnation. By changing the amount of liquid dosed and the time before draining is started, one can easily switch between the various commercially applied methods.

The method according to the present invention is in particular useful in high throughput experimentation (or 'high speed experimentation'), because a large number of catalysts can be prepared simultaneously using a plurality of vessels, optionally with different reaction conditions. High throughput experimentation is well known to the person skilled in the art and is used for instance in the pharmaceutical industry for the discovery and development of new and useful drugs and in the field of catalysts for the preparation and screening of new catalysts.

According to the present invention 'a porous element closing off the vessel outlet' means a porous element whereupon a suitable amount of impregnation liquid may be put for impregnation of the support, wherein substantially no impregnation liquid will pass through and leave the vessel during impregnation. However when pressure is applied (e.g. by a vacuum at the outlet), the impregnation liquid will seep through the porous element. The person skilled in the art will readily understand that the particular characteristics of the porous element and the amount of impregnation liquid used will amongst others depend on the support, impregnation liquid and conditions in the vessel to be used.

The contacting and impregnation of the support with the impregnation liquid takes a suitable amount of time to sufficiently impregnate the support. Afterwards, the impregnated support is optionally drained, depending on the amount of impregnation liquid used. In general an excess amount of impregnation liquid is used, such that -after impregnation- in first instance the excess amount is drained, e.g. by using a vacuum to suck the liquid through the porous element. Then optionally the drying step takes place by drawing or blowing e.g. air through the vessel. Also the impregnated support may, instead or in addition, be dried at an elevated temperature.

Subsequently, the dried impregnated support may, and usually will, be calcined at a suitable temperature, depending on the particular supported catalyst.

Finally, the supported catalyst is collected or transferred to an apparatus for screening the supported catalyst.

According to a preferred embodiment of the method according to the present invention, the porous element comprises a frit.

Herewith a very easy draining through of the impregnation liquid may be achieved when applying a suitable vacuum or overpressure, while a hydrostatic column of impregnation liquid is allowed to be obtained in absence of the vacuum or overpressure.

It has been found that very good results are obtained when the porous element has an average pore diameter of 1-70 µm, preferably 4-40 µm, most preferably 10-16 µm. These pore diameters allow a short hydrostatic column of the impregnation liquid to be obtained when the impregnation liquid is put on top of it. However when a vacuum is applied the impregnation liquid will seep through. If desired the porous element may have hydrophobic or hydrophilic properties.

According to a particularly preferred embodiment of the method according to the present invention, at least two supported catalysts can be prepared in parallel. Herewith a substantial time-saving may be obtained. The parallel approach also facilitates to expose all samples to the same process conditions. However, the person skilled in the art will understand that also different process conditions may be used.

The present invention further relates to an apparatus, in particular suitable for high throughput experimentation, comprising a supported catalyst preparing assembly, wherein the supported catalyst preparing assembly comprises:
- at least one vessel having a vessel inlet and a vessel outlet, wherein the vessel contains a porous element closing off the vessel outlet;
- first feeding means for feeding a support into the vessel inlet;
- second feeding means for feeding impregnation liquid containing an active phase into the vessel inlet;
- draining means for draining the impregnated support by removing excess impregnation liquid through the porous element;
- drying means for drying the impregnated support; and
- optionally heating means for calcining the impregnated support.

The apparatus according to the present invention permits a large number of catalysts to be prepared simultaneously using a plurality of vessels, in a surprisingly simple and elegant way. The reaction conditions in the different vessels may be the same or, if desired, may be different. Therefore, the apparatus according to the present invention is very useful in high throughput experimentation. An important aspect of the apparatus according to the present invention is that draining of the impregnated catalyst may take place without sample transfer to another vessel. Herewith a substantial time-saving may be obtained, while contamination of the supported catalyst is minimized.

As draining means, for instance a vacuum pump connected with the vessel outlet may be used. Instead, means (such as a pressure pump connected with the vessel inlet) may be provided to force the excess impregnation liquid through the porous element. As drying means, e.g. further feeding means may be provided for blowing a gas, such as air, through the vessel.

As is mentioned above, it is preferred according to the present invention that the porous element comprises a frit. Also the porous element preferably has an average pore diameter of 1-70 µm, preferably 4-40 µm, most preferably 10-16 µm.

In a further aspect, the present invention relates to a supported catalyst preparing assembly as described in the apparatus according to the present invention.

Finally, the present invention relates to a vessel as described in the apparatus according to the present invention.

Hereinafter the present invention will be illustrated in more detail by a drawing. Herein shows:
Figure 1 a schematic cross-sectional view of the apparatus according to the present invention, comprising a supported catalyst preparing assembly; and
Figure 2 a schematic cross-sectional view of a rack for holding a series of vessels according to the present invention.

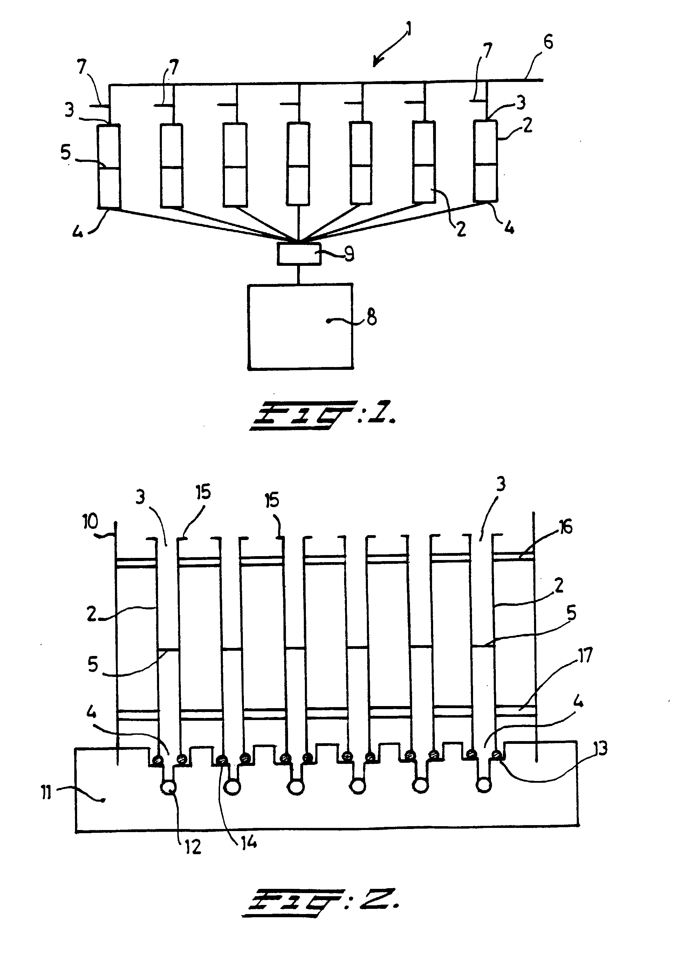

In figure 1 a schematic cross-sectional view of the apparatus according to the present invention is shown. The apparatus comprises an assembly 1. The assembly 1 comprises a plurality of (e.g. quartz) vessels 2, each having a vessel inlet 3 and a vessel outlet 4. Each vessel 2 contains a porous element 5, such as a frit, closing off the vessel outlet 4.

The assembly 1 further comprises first feeding means 6 for feeding a support into the vessel 2 through the vessel inlet 3. As support, any kind of support may be used, such as granules, powder, a monolith, porous foam, etc. In the shown embodiment the feeding means 6 feeds to each of the vessels 2. The persons skilled in the art will understand that each vessel 2 may have its own first feeding means 6 for feeding the support. The first feeding means 6 is (in the shown embodiment) also designed to supply an inert gas or air through the vessel inlet 3. Of course, separate feeding means for the gas may instead be provided.

Further the assembly 1 comprises second feeding means 7 for feeding impregnation liquid containing an active phase through the vessel inlet 3. Also, the assembly 1 comprises a vacuum pump 8 and a manifold 9. Further the assembly 1 comprises (not shown) heating means.

In use of the apparatus according to figure 1, which may of course contain several other components, a support is fed (by feeding means 6 or, if desired, manually) into the vessel 2 through the vessel inlet 3. Hereby the support is placed on top of the frit 5. Then the support is contacted with an impregnation liquid supplied by the second feeding means 7 (or, if desired, manually). After a while, excess impregnation liquid is removed by applying a vacuum at the outlet 4 of the vessel 2 by using the vacuum pump 8 and manifold 9. Suitably, a sealing element such as an O-ring (not shown) may surround the opening of outlet 4 such as to provide an air-tight sealing when a vacuum is applied. Subsequently, the impregnated support on the frit 5 is dried by supplying air or an inert gas through the first feeding means 6. Instead a vacuum may be applied. Then, the dried impregnated support obtained on the frit 5 is further dried by elevating the temperature to a suitable range using (not shown) heating means. To this end e.g. hot air may be blown along the vessels, or the vessels may be placed in an oven. Thereafter, the supported catalyst is calcined using the same or other heating means. Finally, the obtained supported catalyst is collected and/or transferred to e.g. an apparatus for screening catalysts. For collection of the obtained support catalyst special means may be provided, or the vessels may be easily accessible.

The persons skilled in the art will readily understand that many modifications can be made. For instance, the heating and calcining of the support may take place in the apparatus as such, or the vessels 2 may be collected in a rack and transferred to an oven as is illustrated in figure 2 hereinafter.

Also the vessels 2 may be configurated such that they extend horizontally, i.e. the inlets 3 and outlets 4 of the vessels 2 are in the same horizontal plane.

Further the first and second feeding means 6, 7 may be the same using suitable selector valves.

In figure 2 a rack 10, comprising a perforated top plate 16 and a perforated lower plate 17, for holding several rows of six vessels 2 (e.g. having an outer diameter of 30 mm, inner diameter of 25 mm, length of 150 mm) according to the present invention is shown. The rack 10 is placed on a vacuum plate 11 comprising inlets 12 connected with a vacuum pump (not shown). The vacuum plate 11 further contains recesses 13 wherein O-rings 14 are provided. The outlets 4 of the vessels 2 rest on these O-rings 14. In the shown embodiment, the vessels 2 comprise a flange 15 near the inlets 3.

In use of the rack 10, a support is (e.g. manually) fed into the vessel inlet 3 of the vessel 2. Then the support is contacted with an impregnation liquid which is also fed through the vessel inlet 3. After a while, excess impregnation liquid is removed through the frit 5 by applying a vacuum at the outlet 4 using the vacuum plate 11 and the (not-shown) vacuum pump. The O-rings 14 provide for a airtight sealing of the outlets 4.

Then, the rack 10 holding the vessels 2 is removed from the vacuum plate 11 by lifting. The flanges 15 of the vessels 2 will then rest on the top plate 16.

Subsequently, the rack 10 is transferred to an oven (not shown) for drying and/or calcining of the supported catalyst contained in the vessels 2.

As will be clear from the above, the method and apparatus according to the present invention permit several supported catalysts to be prepared simultaneously while contamination of the supported catalysts is not likely to occur or at least minimized.

## Claims

1. Method of preparing a supported catalyst in a vessel comprising a vessel inlet, a vessel outlet and a porous element closing off the vessel outlet, the supported catalyst comprising an active phase on a support, wherein the method comprises the following steps all being performed in the same vessel of:
(a) feeding the support into the vessel through the vessel inlet;
(b) contacting the support with an impregnation liquid containing the active phase in the vessel;
(c) impregnating the support with the impregnation liquid;
(d) optionally draining the impregnated support obtained in step (c) by removing excess impregnation liquid through the porous element;
(e) optionally drying the impregnated support;
(f) optionally calcining the dried impregnated support obtained in step (c), (d) or (e), providing the supported catalyst; and
(g) collecting the supported catalyst obtained in step (c), (d), (e) or (f) .

2. Method according to claim 1, wherein the porous element comprises a frit.

3. Method according to claim 1 or 2, wherein at least two supported catalysts are prepared in parallel.

4. Apparatus, in particular suitable for high throughput experimentation, comprising a supported catalyst preparing assembly (1), wherein the supported catalyst preparing assembly (1) comprises:
- at least one vessel (2) having a vessel inlet (3) and a vessel outlet (4), wherein the vessel (2) contains a porous element (5) closing off the vessel outlet (4);
- first feeding means (6) for feeding a support into the vessel inlet (3);
- second feeding means (7) for feeding impregnation liquid containing an active phase into the vessel inlet (3);
- draining means for draining the impregnated support by removing excess impregnation liquid through the porous element (5) ;
- drying means for drying the impregnated support; and
- optionally heating means for calcining the impregnated support.

5. Apparatus according to claim 4, wherein the porous element (5) comprises a frit.

6. Apparatus according to claim 4 or 5, wherein the porous element (5) has a pore diameter of 1-70 µm, preferably 4-40 µm, most preferably 10-16 µm.

7. Supported catalyst preparing assembly (1) as described in the apparatus according to any of the preceding claims 4-6.

8. Vessel (2) as described in the apparatus according to any of the preceding claims 4-6.
